# FASCICULE DE BREVET EUROPEEN

(11) **EP 3 163 042 B1**
(45) Date de publication et mention de la délivrance du brevet: **15.08.2018**
(21) Numéro de dépôt: 16190921.3
(22) Date de dépôt: 27.09.2016
(51) Int. Cl.: F01N 3/20, F01N 9/00, B60R 16/02

(54) **PROCÉDÉ D'ALIMENTATION ÉLECTRIQUE D'UN DISPOSITIF DE CHAUFFAGE DES GAZ D'ÉCHAPPEMENT D'UN GROUPE MOTOPROPULSEUR D'UN VÉHICULE AUTOMOBILE ET VÉHICULE ASSOCIÉ**
STROMVERSORGUNGSVERFAHREN EINER ABGAS-HEIZVORRICHTUNG EINER MOTORANTRIEBSANLAGE EINES KRAFTFAHRZEUGS, UND ENTSPRECHENDES FAHRZEUG
METHOD FOR SUPPLYING POWER TO A DEVICE FOR HEATING THE EXHAUST GASES OF A DRIVE TRAIN OF A MOTOR VEHICLE AND ASSOCIATED VEHICLE

(30) Priorité: 27.10.2015 FR 1560253
(43) Date de publication de la demande: 03.05.2017
(73) Titulaire: Renault S.A.S., 92100 Boulogne-Billancourt (FR)
(72) Inventeur: MALLET, Philippe, 78810 FEUCHEROLLES (FR); FOSTEIN, Hélène, 92190 MEUDON (FR)

(56) Documents cités:
- FR-A1- 2 778 206
- FR-A1- 3 012 520
- US-A- 5 765 371
- US-A1- 2012 277 973

## Description

### DOMAINE TECHNIQUE AUQUEL SE RAPPORTE L'INVENTION

La présente invention concerne un procédé d'alimentation électrique d'un dispositif de chauffage d'au moins une partie des gaz d'échappement circulant dans une ligne d'échappement d'un groupe motopropulseur d'un véhicule automobile, en sortie d'un moteur à combustion interne de ce groupe motopropulseur, ce véhicule automobile comprenant également une batterie électrique et un alternateur, selon lequel, dans une étape a), on alimente électriquement ledit dispositif de chauffage des gaz d'échappement par l'alternateur du véhicule automobile.

Elle concerne également un véhicule automobile associé.

### ARRIERE-PLAN TECHNOLOGIQUE

Les moteurs à combustion interne Diesel émettent dans leurs gaz d'échappement des hydrocarbures imbrûlés, des particules de suies et des molécules d'oxydes d'azote polluantes. Afin de limiter ces émissions polluantes, des dispositifs de dépollution sont implantés sur la ligne d'échappement en aval de la chambre de combustion.

Ces dispositifs de dépollution peuvent comprendre par exemple un catalyseur d'oxydation et/ou un piège à oxydes d'azote placé en amont d'un filtre à particules. Il peut également s'agir d'un filtre à particules catalytique intégrant un matériau catalytique.

Ces dispositifs de dépollution ne sont efficaces qu'à partir d'une température de fonctionnement seuil donnée. Pendant une phase d'amorçage, dans laquelle la température de ces dispositifs de dépollution augmente progressivement jusqu'à atteindre ladite température de fonctionnement seuil, ceux-ci n'assurent pas la dépollution des gaz d'échappement de manière efficace.

Ainsi, au démarrage ou à faible vitesse par exemple, il est connu de préchauffer les gaz d'échappement avant leur traversée de ces dispositifs de dépollution afin de raccourcir la phase d'amorçage des dispositifs de dépollution.

A cet effet, on utilise un dispositif de chauffage électrique disposé sur la ligne d'échappement en amont des autres dispositifs de dépollution.

Il est connu de la publication EP-A1-2282027 d'alimenter ce dispositif de chauffage électrique par l'alternateur du véhicule automobile.

Un inconvénient de cette solution est que, dans certaines conditions de fonctionnement du moteur, la surcharge du moteur à combustion interne due au fonctionnement de l'alternateur pour alimenter le dispositif de chauffage électrique des gaz d'échappement, c'est-à-dire le surcroît de couple, provoque une augmentation des émissions d'oxydes d'azote, qui est automatiquement limitée par une augmentation de la consommation de carburant du moteur à combustion interne. Une surconsommation de carburant liée à l'alimentation du dispositif de chauffage est ainsi observée dans certaines conditions de fonctionnement du véhicule.

On connaît par ailleurs du document US5765371 un procédé de pilotage de l'alimentation électrique d'un dispositif de chauffage des gaz d'échappement d'un moteur à combustion interne.

Ce procédé de pilotage consiste :
- si latempérature de l'eau de refroidissement du moteur est inférieure à 35 °C, à piloter l'alternateur de façon à ce qu'il alimente à la fois la batterie du véhicule et le dispositif de chauffage, et
- si !a température de cette eau de refroidissement est supérieure à 35°C, à piloter l'alternateur de façon à ce qu'il alimente uniquement la batterie.

On connaît aussi du document FR3012520 un procédé d'alimentation en courant électrique d'un système de chauffage des gaz brûlés d'un moteur à combustion interne.

Selon ce document, lorsque la température des gaz brûlés est inférieure à une valeur seuil, la batterie du véhicule est pilotée pour alimenter le système de chauffage. Puis, lorsque la température des gaz brûlés atteint la température seuil, l'alimentation du système de chauffage est stoppée.

### OBJET DE L'INVENTION

Afin de résoudre l'inconvénient de l'état de la technique précité, on propose selon l'invention un nouveau procédé d'alimentation électrique du dispositif de chauffage des gaz d'échappement, permettant de limiter la surconsommation de carburant lié à cette alimentation.

A cet effet, on propose selon l'invention un procédé d'alimentation tel que décrit en introduction, selon lequel on réalise l'étape a) d'alimentation électrique du dispositif de chauffage des gaz d'échappement par l'alternateur lorsque la charge du moteur à combustion interne du véhicule est inférieure à une première valeur seuil de charge prédéterminée, et, lorsque la charge du moteur à combustion interne du véhicule est supérieure ou égale à ladite première valeur seuil de charge prédéterminée, on alimente dans une étape b) ledit dispositif de chauffage des gaz d'échappement par la batterie électrique du véhicule.

En effet, les conditions de fonctionnement du moteur dans lesquelles la surcharge du moteur à combustion interne entraîne une surconsommation importante en carburant correspondent à une charge moyenne du moteur. La première valeur seuil de charge correspond donc au passage entre une charge faible et une charge moyenne du moteur.

Grâce à l'invention, lorsque la charge du moteur à combustion interne est supérieure ou égale à la première valeur seuil de charge, la charge du moteur n'est pas augmentée par l'utilisation de l'alternateur. Les émissions d'oxydes d'azote restent inchangées et ne sont pas augmentées par l'utilisation de l'alternateur.

En outre, la batterie du véhicule peut être rechargée pendant les décélérations du véhicule et dans les conditions de fonctionnement les plus

Par exemple, ladite première valeur seuil de charge est choisie en calculant la puissance à fournir aux gaz d'échappement en fonction de l'écart de température à obtenir et du débit des gaz, et en comparant la valeur obtenue avec la puissance électrique du dispositif de chauffage installé. Tant que la puissance électrique couvre le besoin, on alimentera le dispositif par la batterie.

Cette première valeur seuil de charge pourra aussi être modifiée. De préférence, elle pourra être augmentée pour tenir compte de conditions de fonctionnement particulières, notamment une charge électrique insuffisante de la batterie ou un intérêt à augmenter la charge du moteur pour d'autres prestations comme par exemple le besoin de chauffage rapide du véhicule en ambiance froide.

La première valeur seuil de charge est alors déterminée au moins en fonction du niveau de charge électrique de la batterie.

De préférence, à l'étape a), on alimente ledit dispositif de chauffage exclusivement par l'alternateur et à l'étape b), on alimente ledit dispositif de chauffage exclusivement par la batterie électrique.

De préférence encore, dans une étape c), lorsque la charge du moteur à combustion interne du véhicule devient supérieure ou égale à une valeur maximale de charge prédéterminée, on stoppe l'alimentation électrique dudit dispositif de chauffage.

Cela économise le carburant et la charge de la batterie du véhicule.

L'invention concerne également un véhicule automobile comprenant une batterie électrique, un alternateur et un groupe motopropulseur avec un moteur à combustion interne et une ligne d'échappement dans laquelle circulent les gaz d'échappement en sortie du moteur à combustion interne, un dispositif de chauffage des gaz d'échappement adapté à chauffer au moins une partie des gaz d'échappement circulant dans la ligne d'échappement, dans lequel il est en outre prévu une unité de commande électronique programmée pour alimenter ledit dispositif de chauffage selon le procédé d'alimentation tel que décrit précédemment.

Ledit dispositif de chauffage des gaz d'échappement est par exemple un catalyseur électrique.

Il peut également s'agir d'une grille chauffante.

En outre, de préférence, ledit dispositif de chauffage des gaz d'échappement est adapté à être connecté électriquement alternativement à la batterie électrique et à l'alternateur du véhicule automobile.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique des différents organes d'un groupe motopropulseur comprenant un moteur à combustion interne avec une ligne d'échappement munie d'un dispositif de chauffage ;
- la figure 2 représente schématiquement l'évolution de la charge du moteur C en fonction du régime R du moteur pour un exemple de fonctionnement du véhicule automobile.

Dans la suite, on appellera « charge moteur » du moteur à combustion interne le rapport du travail fourni par un moteur à un régime donné de ce moteur à combustion interne sur le travail maximal possible à ce régime.

La charge du moteur, pour un régime moteur donné, varie comme le couple moteur. Les termes « amont » et « aval » seront utilisés en référence avec le sens de déplacement des gaz dans les lignes d'admission et d'échappement du groupe motopropulseur.

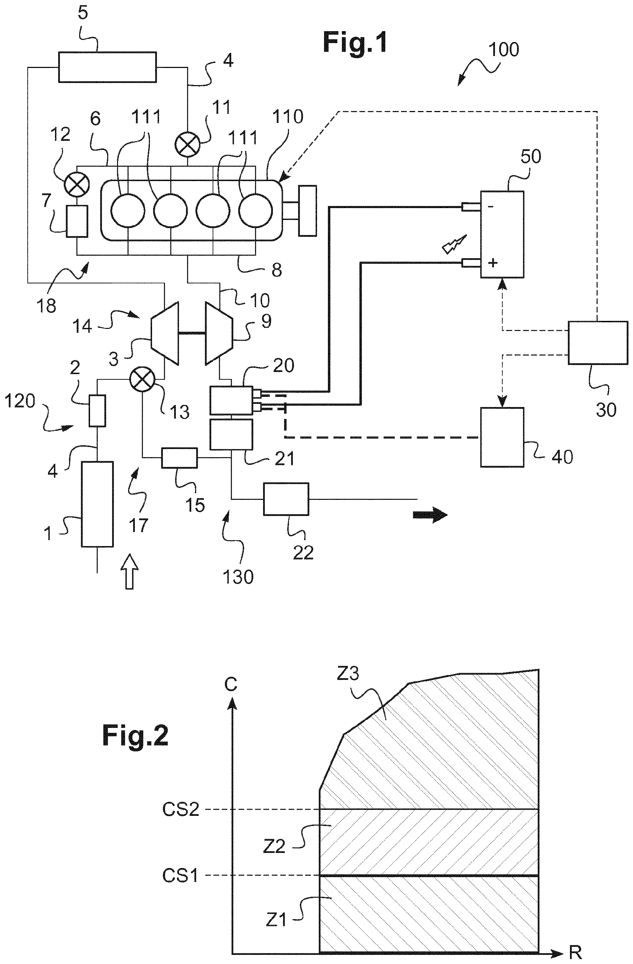

Sur la figure 1, on a représenté schématiquement un groupe motopropulseur 100, comprenant un moteur à combustion interne 110, comprenant ici quatre cylindres 111.

Le groupe motopropulseur 100 comporte avantageusement une unité de commande électronique 30 qui commande le fonctionnement du moteur à combustion interne 110.

Le moteur à combustion interne 110 est un moteur Diesel suralimenté dont les chambres de combustion sont alimentées en air frais par une ligne d'admission 120 et débouchent en aval sur une ligne d'échappement 130.

La ligne d'admission 120 comporte une conduite d'admission 4 dans laquelle circulent les gaz d'admission, comprenant de l'air frais et éventuellement, une proportion contrôlée de gaz d'échappement recirculés, comme expliqué plus loin.

L'air frais pénètre dans la conduite d'admission 4 par un filtre à air 1. Le débit d'air frais est mesuré en entrée de la conduite d'admission 4 par un débitmètre d'air 2 disposé en aval du filtre à air 1.

Le groupe motopropulseur 100 comprend un turbocompresseur 14 comportant deux turbines 3, 9. La turbine entraînante 9 est placée dans une conduite d'échappement 10 de la ligne d'échappement 130 et entraîne la turbine entraînée 3 placée dans la conduite d'admission 4 afin de comprimer les gaz d'admission y circulant.

Cette compression ayant pour effet de réchauffer les gaz d'admission, il est prévu sur le trajet de la conduite d'admission 4, un refroidisseur d'air 5 qui refroidit l'air en sortie du turbocompresseur 14.

La conduite d'admission 4 débouche dans un collecteur 6. Elle comporte en amont de ce collecteur 6 un volet d'admission 11. L'orientation du volet d'admission 11 par rapport à l'axe de la conduite d'admission 4 contrôle le débit d'air frais entrant dans le collecteur 6.

Le collecteur 6 est relié à une valve d'admission de chaque cylindre 111 du moteur 110. Les gaz d'admission comprimés entrent via cette valve d'admission dans la chambre de combustion de chaque cylindre 111 et il est prévu un injecteur qui injecte le carburant dans cette chambre de combustion.

L'unité de commande électronique 30 commande la quantité de carburant injectée par l'injecteur dans la chambre de combustion ainsi que le moment où est réalisée cette injection.

Après la combustion, les gaz d'échappement résiduels sont expulsés hors de la chambre de combustion par une valve d'échappement dans la conduite d'échappement 10 de la ligne d'échappement 130.

Une partie de ces gaz d'échappement est prélevée par un premier circuit de recirculation 18 piqué à la sortie des cylindres 111, qui les ramène, après passage par un refroidisseur d'air 7, dans le collecteur 6 où ils se mélangent aux gaz d'admission arrivant de la conduite d'admission 4. Ce premier circuit de recirculation 18 est appelé circuit de recirculation à haute pression. L'apport de gaz d'échappement dans le collecteur 6 est régulé par une vanne 12 de recirculation des gaz d'échappement à haute pression dite EGR_HP (EGR étant l'acronyme angle pour Exhaust Gaz Recirculation).

Les gaz d'échappement non prélevés par le premier circuit de recirculation circulent dans la conduite d'échappement 10, à travers la turbine entraînante 9 du turbocompresseur 14, puis à travers un dispositif de chauffage 20 électrique de ces gaz d'échappement disposé sur le trajet de la conduite d'échappement. Ils traversent ensuite au moins un dispositif de dépollution 21 avant d'être libérés dans l'atmosphère.

Dans l'exemple de la figure 1, deux dispositifs de dépollution 21, 22 sont prévus successivement sur la ligne d'échappement 130 en aval du dispositif de chauffage 20.

Le premier dispositif de dépollution 21 situé le plus en amont des dispositifs de dépollution est par exemple plus précisément un catalyseur d'oxydation. Il peut s'agir également d'un piège à oxydes d'azote.

Le catalyseur d'oxydation oxyde les composés chimiques réducteurs polluants issus de la combustion du carburant et acheminés dans les gaz d'échappement afin d'éviter leur rejet dans l'atmosphère. Le piège à oxydes d'azote retient les oxydes d'azote et les transforme en gaz neutre.

Le deuxième dispositif de dépollution 22 situé plus en aval est par exemple plus précisément un catalyseur à réduction catalytique sélective et/ou un filtre à particules.

Le catalyseur à réduction catalytique sélective réduit les oxydes d'azote.

Le filtre à particules retient les particules issues de la combustion du carburant et acheminées dans les gaz d'échappement afin d'éviter leur rejet dans l'atmosphère.

Une partie des gaz d'échappement est ici également prélevée par un deuxième circuit de recirculation 17 piqué entre le premier dispositif de dépollution 21 et le deuxième dispositif de dépollution 22. Ce deuxième circuit de recirculation 17 ramène ces gaz d'échappement, après passage par un refroidisseur d'air 15, en amont de la turbine entraînée 3 du turbocompresseur 14 où ils se mélangent à l'air frais arrivant de la conduite d'admission 4. Ce deuxième circuit de recirculation 18 est appelé circuit de recirculation à basse pression. L'apport de gaz d'échappement dans la conduite d'admission 4 est régulé par une vanne 13 de recirculation des gaz d'échappement à basse pression dite EGR_BP (EGR pour Exhaust Gaz Recirculation et BP pour basse pression).

L'unité de commande électronique 30 commande également l'actionnement du volet d'admission 11 et des vannes EGR_HP et EGR_BP 12, 13 pour réguler le débit d'air dans le collecteur 6 et donc la quantité d'air introduite dans la chambre de combustion.

L'unité de commande électronique 30 régule donc le rapport des quantités d'air et de carburant introduites dans la chambre de combustion.

Les gaz d'échappement qui ne sont pas dirigés dans le deuxième circuit de recirculation 18 en sortie du premier dispositif de dépollution 21 traversent ensuite le deuxième dispositif de dépollution 22 de la ligne d'échappement 130 avant d'être libérés dans l'atmosphère.

Quel que soit le premier dispositif de dépollution 21, celui-ci devient efficace lorsque sa température interne atteint une valeur seuil de température.

Cette valeur seuil de température est par exemple comprise entre 150 et 250 degrés, par exemple environ égale à 200 degrés.

Le premier dispositif de dépollution 21 est chauffé par les gaz d'échappement le traversant.

Ainsi, afin de rendre ce premier dispositif de dépollution 21 efficace même lorsque la température des gaz d'échappement est insuffisante pour chauffer le premier dispositif de dépollution 21 au-delà de la température de fonctionnement seuil, il est prévu sur la ligne d'échappement 130 sur le trajet de la conduite d'échappement 10, le dispositif de chauffage 20 des gaz d'échappement.

Ce dispositif de chauffage 20 est disposé en amont du premier dispositif de dépollution 21. Il est plus précisément disposé ici entre la turbine entraînante 9 du turbocompresseur 14 et le premier dispositif de dépollution 21.

Il s'agit d'un dispositif de chauffage 20 électrique, adapté à être connecté électriquement à l'alternateur 40 du véhicule pour son alimentation électrique.

Il s'agit par exemple d'un catalyseur électrique, ou d'une grille chauffante.

De manière remarquable, ce dispositif de chauffage 20 est également adapté à être connecté à la batterie 50 du véhicule pour son alimentation électrique.

Plus précisément, le dispositif de chauffage électrique 20 est adapté à être connecté alternativement à l'alternateur 40 et à la batterie 50.

De manière remarquable, l'unité de commande électronique 30 est alors programmée pour alimenter ledit dispositif de chauffage selon le procédé d'alimentation électrique selon l'invention, selon lequel :
- on réalise une étape a) dans laquelle on alimente électriquement ledit dispositif de chauffage des gaz d'échappement par l'alternateur 40 du véhicule automobile, lorsque la charge du moteur à combustion interne du véhicule est inférieure à une première valeur seuil de charge CS1 prédéterminée, et,
- lorsque la charge du moteur à combustion interne du véhicule est supérieure ou égale à ladite première valeur seuil de charge CS1 prédéterminée, on alimente, dans une étape b), ledit dispositif de chauffage 20 des gaz d'échappement par la batterie électrique 50 du véhicule.

L'unité de commande électronique 30 du véhicule automobile reçoit de nombreuses informations du groupe motopropulseur 100, notamment des informations de capteurs de température et de pression mesurées par différents capteurs disposés à différents endroits du groupe motopropulseur 100. Elle reçoit également des informations sur le régime du moteur à combustion interne 110, le couple demandé par le conducteur, le couple fournit aux roues du véhicule, et des valeurs de températures mesurées en différents points de la ligne d'échappement 130 du moteur. L'unité de commande électronique 30 détermine périodiquement la valeur de la charge du moteur en fonction des informations reçues.

L'unité de commande électronique 30 a également en mémoire une première valeur seuil de charge CS1 prédéterminée en fonction d'un ensemble de conditions de fonctionnement du moteur et/ou du véhicule comprenant au moins le niveau de charge électrique de la batterie, ainsi qu'une deuxième valeur seuil de charge CS2, supérieure à la première.

Lorsque la charge du moteur est inférieure à ladite première valeur seuil de charge CS1, le moteur fonctionne à faible charge. Cela correspond à la situation de fonctionnement du moteur dans les conditions de la zone Z1 de la figure 2.

Dans les conditions de fonctionnement à faible charge, les gaz d'échappements circulants dans la ligne d'échappement ne sont pas très chauds. En particulier, ils ne sont pas suffisamment chauds pour chauffer les premier et second dispositifs de dépollution à 200 degrés Celsius.

Cela est notamment le cas lors du démarrage du moteur, ou dans une situation de conduite à faible vitesse, par exemple en conditions de roulage urbain.

On alimente alors électriquement le dispositif de chauffage 20 de manière à chauffer les gaz d'échappement le traversant.

Dans ces conditions, l'alimentation du dispositif de chauffage par l'alternateur est particulièrement favorable, car l'utilisation de l'alternateur 40 pour alimenter le dispositif de chauffage 20 contribue à faire augmenter la charge du moteur. En conséquence, la température des gaz d'échappement circulant dans la ligne d'échappement augmente, ce qui contribue à chauffer le dispositif de chauffage et les premier et deuxième dispositifs de dépollution traversés par les gaz d'échappement.

En outre, le fonctionnement du moteur 110 présente un meilleur rendement grâce à la surcharge imposée par l'alternateur 40. L'augmentation de la consommation de carburant due à l'utilisation de l'alternateur 40 est ainsi limitée par l'amélioration concomitante du rendement du moteur à combustion interne.

Enfin, dans ces conditions de fonctionnement, les émissions d'oxydes d'azote sont constantes, voire même réduites par l'augmentation de la charge du moteur 110 à combustion interne due à l'utilisation de l'alternateur 40. Ces émissions sont donc limitées.

Pour les valeurs de la charge du moteur supérieures à la première valeur seuil de charge CS1 et inférieure à la deuxième valeur seuil de charge CS2, le moteur fonctionne à charge moyenne. Cela correspond à la situation de fonctionnement du moteur dans les conditions de la zone Z2 de la figure 2.

Dans les conditions de fonctionnement à charge moyenne, la température des gaz d'échappements circulants dans la ligne d'échappement est plus élevée qu'à faible charge, même elle n'est pas suffisante pour que les gaz d'échappement seuls chauffent les dispositifs de dépollution au-delà de leur température de fonctionnement seuil. En particulier, les gaz d'échappement ne sont pas suffisamment chauds pour chauffer les premier et second dispositifs de dépollution 21,22 à 200 degrés Celsius.

On alimente alors encore électriquement le dispositif de chauffage 20 de manière à chauffer les gaz d'échappement le traversant.

Dans les conditions de charge moyenne, l'alimentation du dispositif de chauffage 20 par la batterie 30 réduit la consommation de carburant du véhicule et limite l'augmentation des émissions d'oxydes d'azote par le véhicule.

L'alimentation du dispositif de chauffage 20 par la batterie 50 n'entraîne aucune augmentation des émissions polluantes du moteur à combustion.

Enfin, la consommation en carburant liée à l'utilisation de la batterie électrique 50 est très limitée car cette batterie est adaptée à être rechargée lors des phases de décélération du véhicule automobile. Elle peut également être rechargée dans les conditions de fonctionnement du moteur à combustion interne dans lesquelles l'augmentation de la charge du moteur améliore le rendement du moteur à combustion, ce qui limite la surconsommation liée à cette recharge.

Ainsi, l'alimentation du dispositif de chauffage 20 par la batterie électrique du véhicule lorsque le moteur fonctionne en charge moyenne est économique et écologique.

Les gaz d'échappement étant plus chauds qu'à faible charge, augmenter la charge du moteur en utilisant l'alternateur pour alimenter le dispositif de chauffage dans ces conditions de charge moyenne est inutile pour chauffer les gaz d'échappement. Le dispositif de chauffage 20 assure un chauffage suffisant des dispositifs de dépollution 21, 22 situés en aval sur la ligne d'échappement 130. Le rendement du moteur à combustion interne 110 n'est pas non plus amélioré par une surcharge éventuelle. Ainsi, aucun avantage ne serait lié à l'utilisation de l'alternateur dans les conditions de charge moyenne.

Enfin, à forte charge, plus précisément lorsque la charge du moteur est supérieure à ladite deuxième valeur seuil de charge CS2, ce qui correspond à la situation de fonctionnement du moteur dans les conditions de la zone Z3 de la figure 2, dans une étape c), on stoppe l'alimentation électrique dudit dispositif de chauffage 20.

Dans ces conditions de fortes charges, la température des gaz d'échappement circulant dans la ligne d'échappement est suffisamment élevée pour chauffer les dispositifs de dépollution au-delà de leur température de fonctionnement seuil. Il est donc inutile de contribuer à chauffer ces gaz d'échappement électriquement grâce au dispositif de chauffage électrique 20.

Afin d'économiser le carburant et la charge électrique de la batterie du véhicule, l'alimentation du dispositif de chauffage 20 est alors stoppée. Le dispositif de chauffage est déconnecté de la batterie 50 et de l'alternateur 40.

De préférence, à l'étape a), on alimente ledit dispositif de chauffage exclusivement par l'alternateur 40 lorsque le véhicule fonctionne à faible charge et à l'étape b), on alimente ledit dispositif de chauffage exclusivement par la batterie électrique 50 lorsque le véhicule fonctionne à charge moyenne.

Grâce à la méthode d'alimentation selon l'invention, la consommation en carburant du véhicule est réduite.

Avantageusement, l'utilisation du dispositif de chauffage 20 alimenté par le procédé d'alimentation selon l'invention autorise un fonctionnement continu du catalyseur d'oxydation pour toutes les conditions de charge du moteur, ce qui autorise l'utilisation du circuit de recirculation des gaz d'échappement à basse pression en continu, quelles que soient les conditions de fonctionnement du moteur, et en particulier quelle que soit la charge du moteur.

En variante, on peut prévoir que le dispositif de chauffage des gaz d'échappement soit disposé sur une conduite de dérivation de la ligne d'échappement. Cette conduite de dérivation est par exemple piquée en entrée et en sortie dans la conduite d'échappement. Dans ce cas, une partie des gaz d'échappement circulant dans la ligne d'échappement peut être prélevée dans la conduite d'échappement. Cette partie des gaz d'échappement circule alors dans la conduite de dérivation et est chauffée par le dispositif de chauffage. Le premier dispositif de dépollution peut être placé sur le trajet de la conduite de dérivation, ou sur la conduite d'échappement, en aval de la sortie de la conduite de dérivation.

Avantageusement, lorsque le dispositif de chauffage est disposé sur le trajet de la conduite de dérivation, il est possible de contrôler la fraction du débit de gaz d'échappement le traversant. En outre, il est possible de ne faire passer les gaz d'échappement à travers le dispositif de chauffage que dans des conditions de fonctionnement du moteur prédéterminées.

## Revendications

1. Procédé d'alimentation électrique d'un dispositif de chauffage (20) d'au moins une partie des gaz d'échappement circulant dans une ligne d'échappement (130) d'un groupe motopropulseur (100) d'un véhicule automobile, en sortie d'un moteur à combustion interne (110) de ce groupe motopropulseur (100), ce véhicule automobile comprenant également une batterie électrique (50) et un alternateur (40),
selon lequel, dans une étape a), on alimente électriquement ledit dispositif de chauffage (20) des gaz d'échappement par l'alternateur (40) du véhicule automobile,
**caractérisé en ce qu'**on réalise l'étape a) lorsque la charge du moteur à combustion interne du véhicule est inférieure à une première valeur seuil CS1 de charge prédéterminée, et, lorsque la charge du moteur à combustion interne du véhicule est supérieure ou égale à ladite première valeur seuil CS1 de charge prédéterminée, on alimente dans une étape b) ledit dispositif de chauffage (20) des gaz d'échappement par la batterie électrique (50) du véhicule.

2. Procédé d'alimentation électrique selon la revendication 1, selon lequel ladite première valeur seuil CS1 de charge est déterminée au moins en fonction du niveau de charge électrique de la batterie (50).

3. Procédé d'alimentation électrique selon l'une des revendications 1 et 2, selon lequel, à l'étape a), on alimente ledit dispositif de chauffage (20) exclusivement par l'alternateur (40) et à l'étape b), on alimente ledit dispositif de chauffage (20) exclusivement par la batterie électrique (50).

4. Procédé d'alimentation électrique selon l'une des revendications 1 à 3, selon lequel, dans une étape c), lorsque la charge du moteur à combustion interne du véhicule devient supérieure ou égale à une deuxième valeur seuil CS2 de charge prédéterminée, supérieure à ladite première valeur seuil CS1 de charge, on stoppe l'alimentation électrique dudit dispositif de chauffage (20).

5. Véhicule automobile comprenant une batterie (50) électrique, un alternateur (40) et un groupe motopropulseur (100) avec un moteur à combustion interne (110) et une ligne d'échappement (130) dans laquelle circulent les gaz d'échappement en sortie du moteur à combustion interne (110), un dispositif de chauffage (20) des gaz d'échappement adapté à chauffer au moins une partie des gaz d'échappement circulant dans la ligne d'échappement (130), dans lequel il est en outre prévu une unité de commande électronique (30) programmée pour alimenter ledit dispositif de chauffage (20) selon le procédé d'alimentation selon l'une des revendications 1 à 4.

6. Véhicule automobile selon la revendication 5, dans lequel ledit dispositif de chauffage (20) des gaz d'échappement est un catalyseur électrique.

7. Véhicule automobile selon la revendication 5, dans lequel ledit dispositif de chauffage (20) des gaz d'échappement est une grille chauffante.

8. Véhicule automobile selon l'une des revendications 5 à 7, dans lequel ledit dispositif de chauffage (20) des gaz d'échappement est adapté à être connecté électriquement alternativement à la batterie électrique (50) et à l'alternateur (40) du véhicule automobile.

## Patentansprüche

1. Verfahren zur Stromversorgung einer Vorrichtung zur Erwärmung (20) wenigstens eines Teils der in einer Abgasleitung (130) eines Antriebsstrangs (100) eines Kraftfahrzeugs zirkulierenden Abgase, die aus einem Verbrennungsmotor (110) dieses Antriebsstrangs (100) austreten, wobei dieses Kraftfahrzeug außerdem eine elektrische Batterie (50) und eine Lichtmaschine (40) umfasst,
wobei in einem Schritt a) die Vorrichtung zur Erwärmung (20) der Abgase von der Lichtmaschine (40) des Kraftfahrzeugs mit Strom versorgt wird, **dadurch gekennzeichnet, dass** der Schritt a) durchgeführt wird, wenn die Last des Verbrennungsmotors des Fahrzeugs kleiner als ein vorbestimmter erster Lastschwellenwert CS1 ist, und dass, wenn die Last des Verbrennungsmotors des Fahrzeugs größer oder gleich dem vorbestimmten ersten Lastschwellenwert CS1 ist, in einem Schritt b) die Vorrichtung zur Erwärmung (20) der Abgase von der elektrischen Batterie (50) des Fahrzeugs gespeist wird.

2. Verfahren zur Stromversorgung nach Anspruch 1, wobei der erste Lastschwellenwert CS1 wenigstens in Abhängigkeit vom Ladezustand der Batterie (50) bestimmt wird.

3. Verfahren zur Stromversorgung nach einem der Ansprüche 1 und 2, wobei im Schritt a) die Vorrichtung zur Erwärmung (20) ausschließlich von der Lichtmaschine (40) gespeist wird und im Schritt b) die Vorrichtung zur Erwärmung (20) ausschließlich von der elektrischen Batterie (50) gespeist wird.

4. Verfahren zur Stromversorgung nach einem der Ansprüche 1 bis 3, wobei in einem Schritt c), wenn die Last des Verbrennungsmotors des Fahrzeugs größer oder gleich einem vorbestimmten zweiten Lastschwellenwert CS2 wird, der größer als der erste Lastschwellenwert CS1 ist, die Stromversorgung der Vorrichtung zur Erwärmung (20) gestoppt wird.

5. Kraftfahrzeug, welches eine elektrische Batterie (50), eine Lichtmaschine (40) und einen Antriebsstrang (100) mit einem Verbrennungsmotor (110) und einer Abgasleitung (130), in welcher die aus dem Verbrennungsmotor (110) austretenden Abgase zirkulieren, und eine Vorrichtung zur Erwärmung (20) der Abgase, die dafür ausgelegt ist, wenigstens eines Teils der in der Abgasleitung (130) zirkulierenden Abgase zu erwärmen, umfasst, in welchem außerdem eine elektronische Steuereinheit (30) vorgesehen ist, die dafür programmiert ist, die Vorrichtung zur Erwärmung (20) gemäß dem Verfahren zur Stromversorgung nach einem der Ansprüche 1 bis 4 zu speisen.

6. Kraftfahrzeug nach Anspruch 5, wobei die Vorrichtung zur Erwärmung (20) der Abgase ein elektrischer Katalysator ist.

7. Kraftfahrzeug nach Anspruch 5, wobei die Vorrichtung zur Erwärmung (20) der Abgase ein Heizgitter ist.

8. Kraftfahrzeug nach einem der Ansprüche 5 bis 7, wobei die Vorrichtung zur Erwärmung (20) der Abgase dafür ausgelegt ist, alternativ mit der elektrischen Batterie (50) und mit der Lichtmaschine (40) des Kraftfahrzeugs elektrisch verbunden zu werden.

## Claims

1. Method for supplying the electrical power to a device (20) for heating at least a part of the exhaust gases circulating in an exhaust line (130) of a drive train (100) of a motor vehicle, at the output of an internal combustion engine (110) of this drive train (100), this motor vehicle also comprising an electric battery (50) and an alternator (40),
whereby, in a step a), said device (20) for heating the exhaust gases is supplied with electrical power by the alternator (40) of the motor vehicle,
**characterized in that** the step a) is performed when the load of the internal combustion engine of the vehicle is less than a first predetermined load threshold value CS1, and, when the load of the internal combustion engine of the vehicle is greater than or equal to said first predetermined load threshold value CS1, in a step b) said device (20) for heating the exhaust gases is supplied with power by the electric battery (50) of the vehicle.

2. Electrical power supply method according to Claim 1, whereby said first load threshold value CS1 is determined at least as a function of the level of electrical charge of the battery (50).

3. Electrical power supply method according to one of Claims 1 and 2, whereby, in the step a), said heating device (20) is supplied with power exclusively by the alternator (40) and in the step b), said heating device (20) is supplied with power exclusively by the electric battery (50).

4. Electrical power supply method according to one of Claims 1 to 3, whereby, in a step c), when the load of the internal combustion engine becomes greater than or equal to a second predetermined load threshold value CS2, greater than said first load threshold value CS1, the supply of electrical power to said heating device (20) is stopped.

5. Motor vehicle comprising an electric battery (50), and alternator (40) and a drive train (100) with an internal combustion engine (110) and an exhaust line (130) in which the exhaust gases at the output of the internal combustion engine (110) circulate, a device (20) for heating the exhaust gases suitable for heating at least a part of the exhaust gases circulating in the exhaust line (130), in which there is also provided an electronic control unit (30) programmed to supply power to said heating device (20) according to the power supply method according to one of Claims 1 to 4.

6. Motor vehicle according to Claim 5, in which said device (20) for heating the exhaust gases is an electric catalyser.

7. Motor vehicle according to Claim 5, in which said device (20) for heating the exhaust gases is a heating grid.

8. Motor vehicle according to one of Claims 5 to 7, in which said device (20) for heating the exhaust gases is suitable for being electrically connected alternately to the electric battery (50) and to the alternator (40) of the motor vehicle.
